# EUROPÄISCHE PATENTSCHRIFT

(11) **EP 2 057 036 B1**
(45) Veröffentlichungstag und Bekanntmachung des Hinweises auf die Patenterteilung: **12.10.2011**
(21) Anmeldenummer: 07817433.1
(22) Anmeldetag: 16.08.2007
(51) Int. Cl.: B60R 1/04, G01C 21/00, B60Q 1/50, B60R 1/12, B60R 11/02

(54) **INNENRÜCKSPIEGEL MIT ZUSATZEINRICHTUNG**
INTERIOR REAR VIEW MIRROR WITH AN ADDITIONAL DEVICE
RÉTROVISEUR INTÉRIEUR AVEC ÉQUIPEMENT ACCESSOIRE

(30) Priorität: 01.09.2006 DE 202006013552 U
(43) Veröffentlichungstag der Anmeldung: 13.05.2009
(73) Patentinhaber: Magna Mirrors Holding GmbH, 63877 Sailauf (DE)
(72) Erfinder: LÜFTNER, Robert, 97904 Dorfprozelten (DE); FUCHS, Hans-Joachim, 97904 Dorfprozelten (DE)
(74) Vertreter: von den Steinen, Axel
(86) Internationale Anmeldenummer: PCT/DE2007/001446
(87) Internationale Veröffentlichungsnummer: WO 2008/025324

(56) Entgegenhaltungen:
- DE-A1- 3 605 704
- US-A- 3 236 152
- US-A- 5 432 496
- US-A1- 2003 011 905
- US-A1- 2006 164 230

## Beschreibung

Die Erfindung betrifft einen Innenrückspiegel zur Anordnung im Innenraum eines Kraftfahrzeuges nach dem Oberbegriff des Anspruchs 1.

Gattungsgemäße Innenrückspiegel weisen neben dem Spiegelelement zur Beobachtung des nachfolgenden Verkehrs eine Zusatzeinrichtung auf, die am Gehäuse des Innenrückspiegels verstellbar gelagert ist. Der im Innenrückspiegel vorhandene Bauraum wird zur Unterbringung der Zusatzeinrichtung genutzt, wobei die Zusatzeinrichtung beispielsweise einen kleinen Bildschirm oder eine Ablage zur Aufbewahrung von Kleinteilen oder sonstige Einrichtungen aufweisen kann. So sind beispielsweise Innenrückspiegel mit verstellbar gelagerter Videoeinheit bekannt, die beim Einlegen des Rückwertsgangs ausgefahren wird und die Videobilder aus dem Fahrzeugraum anzeigen. Alternativ sind auch Videoeinheiten am Innenrückspiegel bekannt, mit denen Bilder der Innenraumkammara zur Beobachtung der Passagiere im Fahrzeugraum des Kraftfahrzeuges angezeigt werden können. Immer weitere Verbreitung finden auch Navigationsdisplays, die am Innenrückspiegel befestigt sind.

Gemäß dem bekannten Stand der Technik werden die Zusatzeinrichtungen seitlich aus dem Innenrückspiegel ausgefahren. Insbesondere bei Zusatzeinrichtungen mit höherem Eigengewicht, beispielsweise Videoeinheiten, führt diese seitliche Anordnung der Zusatzeinrichtungen zu einer ungünstigen Schwerpunktverlagerung des zentrisch befestigten Innenspiegels. Untersuchungen haben dabei gezeigt, dass auf den Innenspiegel im Fahrbetrieb primär Vibrationskräfte wirken, die im Wesentlichen vertikal ausgerichtet sind. Diese vertikal ausgerichteten Vibrationskräfte führen aufgrund der durch die Zusatzeinrichtung verursachten Schwerpunktverlagerungen dazu, dass es zu Sichtverzerrungen aufgrund der erhöhten Vibrationsneigung des Innenrückspiegels kommt. Im ungünstigsten Fall könnten die Vibrationskräfte zu einer unerwünschten Verstellung des Spiegelgehäuses durch Rotation um die Längsachse führen, wodurch die Fahrsicherheit gefährdet ist. Ein Innenseich blich spiegel mit den Merkmalen des Oberbegriffs des Anspruchs 1 ist aus der US-A-5 432 496 bekannt.

Ausgehend von diesem Stand der Technik ist es deshalb Aufgabe der vorliegenden Erfindung einen neuen Innenrückspiegel mit Zusatzeinrichtung vorzuschlagen, der eine geringere Vibrationsneigung aufweist.

Diese Aufgabe wird durch einen Innenrückspiegel nach der Lehre des Anspruchs 1 gelöst.

Vorteilhafte Ausführungsformen der Erfindung sind Gegenstand der Unteransprüche.

Der erfindungsgemäße Innenrückspiegel beruht auf dem Grundgedanken, dass der Schwerpunkt der Zusatzeinrichtung in einer Vertikalebene liegt, die parallel zur Fahrzeuglängsachse und durch den Schwerpunkt des Innenrückspiegels verläuft. Im Ergebnis führt diese Art der Anordnung dazu, dass die vom Schwerpunkt der Zusatzeinrichtung vertikal nach unten gerichteten Vibrationskräfte in der gleichen Vertikalebene parallel zur Fahrzeuglängsachse wirken wie die Vibrationskräfte, die vom Schwerpunkt des Innenrückspiegels ausgehen. Dies führt dazu, dass aufgrund der Anordnung in der gleichen Vertikalebene parallel zur Fahrzeuglängsachse kein Drehmoment auf den Innenrückspiegel wirkt. Eine Rotation des Innenrückspiegels verursacht durch Vibrationskräfte ist damit weitgehend ausgeschlossen. Von größter Bedeutung ist die Vermeidung von Vibrationsdrehmomenten naturgemäß im Normalbetrieb, bei der sich die Zusatzeinrichtung in ihrer Ruhestellung innerhalb des Innenrückspiegels befindet. Insbesondere bei Anordnung der Zusatzeinrichtung in ihrer Ruhestellung sollte deshalb der Schwerpunkt der Zusatzeinrichtung in der Vertikalebene liegen, die parallel zur Fahrzeuglängsachse und durch den Schwerpunkt des Innenrückspiegels verläuft.

Weiterhin ist es selbstverständlich vorteilhaft, wenn der Schwerpunkt der Zusatzeinrichtung zugleich auch in einer Vertikalebene liegt, die rechtwinklig zur Fahrzeuglängsachse und durch den Schwerpunkt des Innenrückspiegels verläuft. Im Ergebnis liegt in diesem Falle der Schwerpunkt der Zusatzeinrichtung lotrecht unterhalb des Schwerpunkts des Innenrückspiegels.

Um die Vibrationsneigung des Innenrückspiegels nicht nur bei Anordnung der Zusatzeinrichtung in ihrer Ruhestellung, sondern auch bei Anordnung in ihrer Gebrauchsstellung zu verbessern, kann durch geeignete Anordnung der Zusatzeinrichtung dafür gesorgt werden, dass der Schwerpunkt der Zusatzeinrichtung auch in der Gebrauchsstellung in einer Vertikalebene liegt, die parallel zur Fahrzeuglängsachse und durch den Schwerpunkt des Innenrückspiegels verläuft.

Gleiches gilt selbstverständlich auch für die Anordnung des Schwerpunks während der in Gebrauchsstellung befindlichen Zusatzeinrichtung in einer Vertikalebene, die rechtwinklig zur Fahrzeuglängsachse und durch den Schwerpunkt des Innenrückspiegels verläuft.

Nach einer bevorzugten Ausführungsform der Erfindung kann die Zusatzeinrichtung nach oben und/oder nach unten aus dem Gehäuse verstellt, beispielsweise ausgefahren werden, wobei der dabei zurückgelegte Stellweg des Schwerpunkts der Zusatzeinrichtung in der Vertikalebene liegt, die parallel zur Fahrzeuglängsachse und durch den Schwerpunkt des Innenrückspiegels verläuft.

Dabei ist selbstverständlich zusätzlich auch noch denkbar, dass der Stellweg des Schwerpunkts der Zusatzeinrichtung zugleich auch in einer Vertikalebene liegt, die rechtwinklig zur Fahrzeuglängsachse und durch den Schwerpunkt des Innenrückspiegels verläuft. In diesem Falle verläuft also der Stellweg der Zusatzeinrichtung in einer Lotachse durch den Schwerpunkt des Innenrückspiegels.

Eine weitere Verbesserung der Vibrationsfestigkeit des Innenrückspiegels ergibt sich, wenn auch der Befestigungspunkt, mit dem das Gehäuse des Innenrückspiegels beweglich im Innenraum des Fahrzeuges gelagert ist, in der Vertikalebene liegt, die parallel, beziehungsweise rechtwinklig zur Fahrzeuglängsachse und durch den Schwerpunkt des Innenrückspiegels verläuft.

Welchem Zweck die Zusatzeinrichtung am Innenrückspiegel dient, ist grundsätzlich beliebig. Nach einer bevorzugten Ausführungsform ist eine Videoeinheit zur Darstellung optischer Signale an der Zusatzeinrichtung befestigt. Insbesondere für die verstellbare Lagerung von Navigationsdisplays beziehungsweise Kammarabildschirmen am Innenrückspiegel ist die erfindungsgemäße Befestigung der Zusatzeinrichtung von besonderem Vorteil, weil die Vibrationsfestigkeit des Innenrückspiegels trotz des relativ hohen Gewichts dieser Videoeinheiten gewährleistet bleibt.

In welcher Weise die Zusatzeinrichtung am Innenrückspiegel verstellt wird, ist grundsätzlich beliebig. Die Verstellung kann insbesondere auch manuell erfolgen. Nach einer bevorzugten Ausführungsform ist vorgesehen, dass die Zusatzeinrichtung elektromechanisch ausfahrbar ist, wozu im Innenrückspiegel ein entsprechender elektromechanischer Antrieb vorgesehen wird.

Weiterhin ist es besonders vorteilhaft, wenn die Zusatzeinrichtung in Abhängigkeit bestimmter Betriebszustände automatisch ausgefahren wird. Beispielsweise kann die Zusatzeinrichtung automatisch bei Aktivierung des Navigationssystems, beziehungsweise beim Einlegen des Rückwärtsgangs ausgefahren werden, um das Navigationsdisplay, beziehungsweise den Kammarabildschirm zur Anzeige der Bilder der Rückfahrkammara sichtbar werden zu lassen. Für bestimmte Anwendungen ist es zusätzlich von Vorteil, wenn die Zusatzeinrichtung wahlweise auch vom Gehäuse des Innenrückspiegels abgenommen werden kann. Auf diese Weise kann beispielsweise ein Navigationsgerät auch außerhalb des Fahrzeuges benutzt werden.

Um die Datenkommunikation der Fahrzeugsteuerung mit zusätzlichen Funktionsmodulen an der Zusatzeinrichtung zu erleichtern, kann die Zusatzeinrichtung eine Kommunikationseinrichtung zur drahtlosen Datenübertragung aufweisen. Beispielsweise kann an der Zusatzeinrichtung eine WLan-Schnittstelle oder eine Bluetooth-Schnittstelle vorgesehen sein. Außerdem kann die Zusatzeinrichtung auch mit einer separaten Spannungsversorgung ausgestattet werden, um die Zusatzeinrichtung vom Spannungsnetz des Fahrzeuges unabhängig betreiben zu können.

Eine Ausführungsform der Erfindung ist in der Zeichnung schematisch dargestellt und wird nachfolgend beispielhaft erläutert.

Es zeigt:

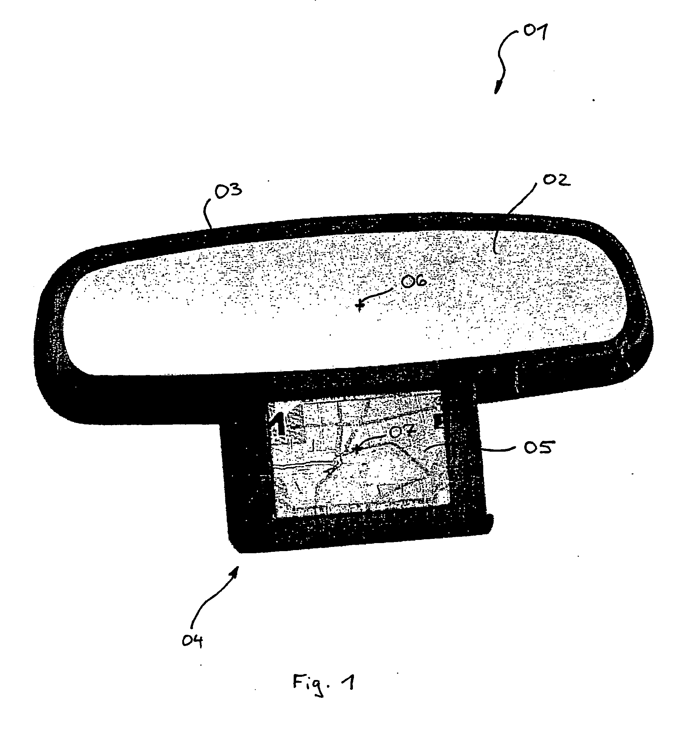

- **Fig. 1**: Einen erfindungsgemäßen Innenrückspiegel mit Zusatzeinrichtung in perspektivischer Ansicht von vorne.

**Fig. 1** zeigt einen Innenrückspiegel 01 mit einem Spiegelelement 02 und einem Gehäuse 03. An der Unterseite des Gehäuses 03 ist eine Zusatzeinrichtung 04 nach unten ausfahrbar gelagert. An der Zusatzeinrichtung 04 ist ein Navigationsdisplay 05 befestigt. Die Zusatzeinrichtung 04, die in **Fig. 1** in ihrer ausgefahrenen Gebrauchsstellung gezeigt ist, kann mittels eines elektromechanischen Antriebs ins Innere des Gehäuses 03 verfahren werden, so dass der untere Rand der Zusatzeinrichtung 04 mit dem unteren Rand des Gehäuses 03 abschließt.

Der Schwerpunkt 06 des Innenrückspiegels 01 und der Schwerpunkt 07 der Zusatzeinrichtung 04 mit dem darin befestigten Navigationsdisplay 05 ist in **Fig. 1** schematisch angedeutet. Der Schwerpunkt 07 der Zusatzeinrichtung 04 befindet sich lotrecht unterhalb dem Schwerpunkt 06 des Innenrückspiegels 01, so dass die durch das Gewicht der Zusatzeinrichtung 04 beziehungsweise des Navigationsdisplays 05 verursachten Vibrationskräfte koaxial zu den Vibrationskräften verlaufen, die durch das Gewicht des Spiegelelements 02 und des Gehäuses 03 verursacht werden. Der Stellweg des Schwerpunkts 07 bei Verstellung der Zusatzeinrichtung 04 zwischen Gebrauchsstellung und Ruhestellung verläuft entlang einer Lotachse durch die Schwerpunkte 06 und 07.

Im Ergebnis wird damit erreicht, dass der Innenrückspiegel 01 eine hohe Vibrationsfestigkeit aufweist und unerwünschte Rotationsstellbewegungen verursacht durch Vibrationskräfte im Prinzip ausgeschlossen sind.

## Patentansprüche

1. Innenrückspiegel (01) zur Anordnung im Innenraum eines Kraftfahrzeugs mit einem Spiegelelement (02) zur Beobachtung des nachfolgenden Verkehrs, wobei am Gehäuse (03) des Innenrückspiegels (01) eine Zusatzeinrichtung (04) vorgesehen ist, die zwischen einer Ruhestellung im Inneren des Gehäuses (03) und einer Gebrauchsstellung außerhalb des Gehäuses (03) nach oben und/oder unten verstellt werden kann,
**dadurch gekennzeichnet,**
**dass** der Schwerpunkt (07) der verstellbar gelagerten Zusatzeinrichtung (04) über den gesamten Stellweg von der Ruhestellung bis in die Gebrauchsstellung in einer Achse liegt, welche senkrecht zur Fahrzeuglängsachse im Wesentlichen vertikal in Richtung der Schwerkraft durch den Schwerpunkt (06) des Innenrückspiegels (01) verläuft, so dass die durch das Gewicht der Zusatzeinrichtung (04) verursachten Vibrationskräfte koaxial zu den Vibrationskräften verlaufen, die durch das Gewicht des Spiegelelements (02) und des Gehäuses (03) verursacht werden.

2. Innenrückspiegel nach Anspruch 1,
**dadurch gekennzeichnet,**
**dass** der Befestigungspunkt, in dem das Gehäuse (03) des Innenrückspiegels (01) beweglich im Innenraum des Fahrzeuges gelagert ist, in der Vertikalebene liegt, die parallel zur Fahrzeuglängsachse und durch den Schwerpunkt (06) des Innenrückspiegels (01) verläuft.

3. Innenrückspiegel nach einem der Ansprüche 1 bis 2,
**dadurch gekennzeichnet,**
**dass** der Befestigungspunkt, in dem das Gehäuse (03) des Innenrückspiegels (01) beweglich im Innenraum des Fahrzeuges gelagert ist, in der Vertikalebene liegt, die rechtwinkelig zur Fahrzeuglängsachse und durch den Schwerpunkt (06) des Innenrückspiegels (01) verläuft.

4. Innenrückspiegel nach einem der Ansprüche 1 bis 3,
**dadurch gekennzeichnet,**
**dass** an der Zusatzeinrichtung (04) eine Videoeinheit zur Darstellung optischer Signale, insbesondere ein Navigationsdisplay (05) oder ein Kamerabildschirm, befestigt ist.

5. Innenrückspiegel nach einem der Ansprüche 1 bis 4,
**dadurch gekennzeichnet,**
**dass** die Zusatzeinrichtung (04) elektromechanisch ausfahrbar ist.

6. Innenrückspiegel nach einem der Ansprüche 1 bis 5,
**dadurch gekennzeichnet,**
**dass** die Zusatzeinrichtung (04) in Abhängigkeit bestimmter Betriebszustände automatisch ausfahrbar ist.

7. Innenrückspiegel nach einem der Ansprüche 1 bis 6,
**dadurch gekennzeichnet,**
**dass** die Zusatzeinrichtung (04) vom Gehäuse (03) des Innenrückspiegels (01) abnehmbar ist.

8. Innenrückspiegel nach einem der Ansprüche 1 bis 7,
**dadurch gekennzeichnet,**
**dass** die Zusatzeinrichtung (04) eine Kommunikationseinrichtung zur drahtlosen Datenübertragung, insbesondere eine WLAN-Schnittstelle oder eine Bluetooth-Schnittstelle, aufweist.

9. Innenrückspiegel nach einem der Ansprüche 1 bis 8,
**dadurch gekennzeichnet,**
**dass** die Zusatzeinrichtung (04) eine vom Spannungsnetz des Fahrzeuges unabhängige Spannungsversorgung aufweist.

## Claims

1. An interior rear view mirror (01) for arrangement in the interior of a motor vehicle, with a mirror element (02) for observing the traffic following behind, wherein on the housing (03) of the interior rear view mirror (01), an additional device (04) is provided which can be adjusted upwards and/or downwards between an inoperative position in the interior of the housing (03) and a usage position outside the housing (03),
**characterized in that**
the centre of gravity (07) of the adjustably mounted additional device (04), throughout the complete adjustment travel from the inoperative position to the usage position, lies in one axis which runs perpendicular to the longitudinal axis of the vehicle substantially vertically in the direction of gravity through the centre of gravity (06) of the interior rear view mirror (01), such that the vibration forces caused by the weight of the additional device (04) run coaxial to the vibration forces that are caused by the weight of the mirror element (02) and of the housing (03).

2. The interior rear view mirror according to claim 1,
**characterized in that**
the attachment point, in which the housing (03) of the interior rear view mirror (01) is movably mounted in the interior of the vehicle, lies in the vertical plane which runs parallel to the longitudinal axis of the vehicle and through the centre of gravity (06) of the interior rear view mirror (01).

3. The interior rear view mirror according to any one of the claims 1 to 2,
**characterized in that**
the attachment point, in which the housing (03) of the interior rear view mirror (01) is movably mounted in the interior of the vehicle, lies in the vertical plane which runs perpendicular to the longitudinal axis of the vehicle and through the centre of gravity (06) of the interior rear view mirror (01).

4. The interior rear view mirror according to any one of the claims 1 to 3,
**characterized in that**
on the additional device (04), a video unit for displaying optical signals, in particular a navigation display (05) or a camera monitor, is attached.

5. The interior rear view monitor according to any one of the claims 1 to 4,
**characterized in that**
the additional device (04) can be pulled out electro-mechanically.

6. The interior rear view mirror according to any one of the claims 1 to 5,
**characterized in that**
the additional device (04) can be pulled out automatically depending on certain operating states.

7. The interior rear view mirror according to any one of the claims 1 to 6,
**characterized in that**
the additional device (04) can be detached from the housing (03) of the interior rear view mirror (01).

8. The interior rear view mirror according to any one of the claims 1 to 7,
**characterized in that**
the additional device (04) has a communication device for wireless data transfer, in particular a WLAN interface or a Bluetooth interface.

9. The interior rear view mirror according to any one of the claims 1 to 8,
**characterized in that**
the additional device (04) has a power supply which is independent from the power network of the vehicle.

## Revendications

1. Rétroviseur intérieur (01) destiné à être agencé à l'intérieur d'un véhicule automobile, comprenant un élément de miroir (02) pour l'observation du trafic en arrière, dans lequel un dispositif auxiliaire (04) est prévu au boîtier (03) du rétroviseur intérieur (01) et peut être ajusté vers le haut et/ou vers le bas entre une position de repos à l'intérieur du boîtier (03) et une position d'utilisation à l'extérieur du boîtier (03),
**caractérisé en ce que**
le centre de gravité (07) du dispositif auxiliaire (04) étant monté de façon ajustable, le long du trajet d'ajustage entier à partir de la position de repos jusqu'à la position d'utilisation, se trouve dans un seul axe passant perpendiculairement à l'axe longitudinal du véhicule de façon sensiblement verticale en direction de la gravitation à travers le centre de gravité (06) du rétroviseur intérieur (01), de manière à ce que les forces vibratoires produites par le poids du dispositif auxiliaire (04) passent coaxialement aux forces vibratoires qui sont produites par le poids de l'élément de miroir (02) et le boîtier (03).

2. Rétroviseur intérieur selon la revendication 1,
**caractérisé en ce que**
le point de fixation, dans lequel le boîtier (03) du rétroviseur intérieur (01) est monté de manière mobile à l'intérieur du véhicule, se trouve dans le plan vertical passant parallèlement à l'axe longitudinal du véhicule et à travers le centre de gravité (06) du rétroviseur intérieur (01).

3. Rétroviseur intérieur selon l'une quelconque des revendications 1 à 2,
**caractérisé en ce que**
le point de fixation, dans lequel le boîtier (03) du rétroviseur intérieur (01) est monté de manière mobile dans l'intérieur du véhicule, se trouve dans le plan vertical passant perpendiculairement à l'axe longitudinal du véhicule et à travers le centre de gravité (06) du rétroviseur intérieur (01).

4. Rétroviseur intérieur selon l'une quelconque des revendications 1 à 3,
**caractérisé en ce qu'**
une unité vidéo, en particulier un écran de navigation (05) ou bien un écran de caméra, est fixée au dispositif auxiliaire (04) pour afficher des signaux optiques.

5. Rétroviseur intérieur selon l'une quelconque des revendications 1 à 4,
**caractérisé en ce que**
le dispositif auxiliaire (04) est électro-mécaniquement déployable.

6. Rétroviseur intérieur selon l'une quelconque des revendications 1 à 5,
**caractérisé en ce que**
le dispositif auxiliaire (04) est automatiquement déployable en fonction de certaines conditions opérationnelles.

7. Rétroviseur intérieur selon l'une quelconque des revendications 1 à 6,
**caractérisé en ce que**
le dispositif auxiliaire (04) est détachable du boîtier (03) du rétroviseur intérieur (01).

8. Rétroviseur selon l'une quelconque des revendications 1 à 7,
**caractérisé en ce que**
le dispositif auxiliaire (04) présente un dispositif de communication pour le transfert de données sans fil, en particulier une interface WIFI ou une interface Bluetooth.

9. Rétroviseur intérieur selon l'une quelconque des revendications 1 à 8,
**caractérisé en ce que**
le dispositif auxiliaire (04) présente une alimentation en courant qui est indépendante du réseau électrique du véhicule.
